# EUROPEAN PATENT SPECIFICATION

(11) **EP 1 183 146 B1**
(45) Date of publication and mention of the grant of the patent: **27.11.2002**
(21) Application number: 00929417.4
(22) Date of filing: 25.04.2000
(51) Int. Cl.: B29C 49/42, B25J 15/02, B23Q 7/04

(54) **IMPROVED GRIPPERS FOR HANDLING PREFORMS**
VERBESSERTER GREIFER ZUM HANDHABEN VON VORFORMLINGEN
PINCES DE PREHENSION AMELIOREES POUR LA MANIPULATION DE PREFORMES

(30) Priority: 09.06.1999 IT PN990023 U
(43) Date of publication of application: 06.03.2002
(73) Proprietor: SIPA S.p.A., I-31029 Vittorio Veneto (IT)
(72) Inventor: ZOPPAS, Matteo, I-33074 Fontanafredda (IT)
(74) Representative: Busca, Luciano
(86) International application number: PCT/EP00/03679
(87) International publication number: WO 00/076746

(56) References cited:
- DE-U- 29 713 510
- FR-A- 2 720 679

## Description

The present invention refers to a gripper adapted to most effectively and in a semi-automatic manner seize, ie. hold firmly, and release cylindrical bodies.

Although for reasons of greater descriptive simplicity reference will be made to preforms of thermoplastic material used in the production of containers in the following description, the present invention shall of course to be understood as applying also to other cylindrical bodies used in different applications, as far as they do not depart from the scope of the appended claims.

It is known, from DE 29713510 and FR 2720679, grippers for seizing and holding firmly preforms which comprise a handling arm, a pair of symmetrical, elastically diverging members, and connecting means between said arm and said symmetrical members. The latter are shaped so as to form a concavity whose opposite arms are arranged and sized in such a manner as to enable a cylindrical portion of the collar of a preform to be inserted therein by means of a simple pressure of said collar against the outer portions of said concavity, which, owing to the action of such a pressure, are caused to be enlarged by such an extent as adequate to enable the collar of the preform to slip into said concavity in which it is then retained.

However, such an operation and the particular type of gripper used to carry it out, have following drawbacks:
- the preform may be subjected to both axial and transversal stresses; in order to be able to withstand such stresses, said symmetrical members must possess a considerable elastic strength.

However, the required extent of said elastic strength brings about a considerable friction between said arms and the outer surface of the preform, which therefore undergoes a slight abrasion, considering that it is made of thermoplastic material that is only slightly heated up. In a situation of large-scale series production, this fact practically causes tiny particles, ie. the so-called "flour" of the plastic material involved to be produced, which then contaminates the adjacent parts of the plant and disturbs the regular flow of the subsequent process operations and makes them inaccurate.

If on the other hand such an undesired effect has to be reduced, the need arises for the elastic gripping force of said arms to be reduced. Such a constraint, however, is largely known to all those skilled in the art to bring about corresponding inaccuracies in the positioning of the preform, with clear handling difficulties resulting therefrom.

Moreover, making grippers provided with holding arms having a considerable elastic strength implies a production that requires a far higher extent of accuracy and, therefore, is much more expensive.

It is therefore a main purpose of the present invention to provide a gripper for handling cylindrical bodies, and in particular plastic preforms, which does away with the above described drawbacks and, at the same time, is compact, safe and reliable in its operation, and requires a simple, reliable construction based on the use of readily available techniques.

Such a type of gripper is obtained and implemented with the characteristics that are substantially described with particular reference to the appended claims.

Anyway, features and advantages of the present invention can more readily be understood from the description that is given below by way of non-limiting example with reference to the accompanying drawings, in which:
- Figure 1 is a perspective view of a gripper according to the present invention;
- Figure 2 is a similar perspective view of a component part of the same gripper illustrated in Figure 1;

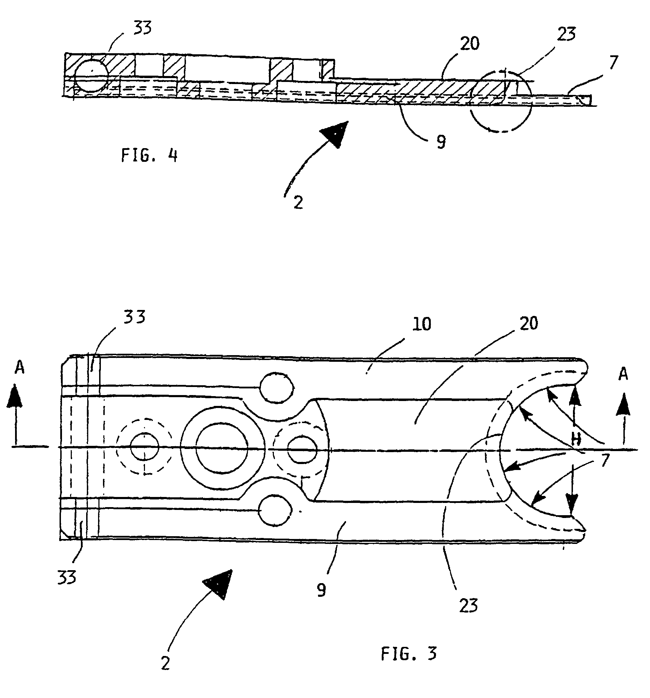

- Figure 3 is a top plan view of the same component part illustrated in Figure 2;
- Figure 4 is a view along the A - A section of the component part illustrated in Figure 3;
- Figure 5 is a view along the B - B section of the gripper illustrated in Figure 1;
- Figure 6 is a view along the A - A section of the gripper illustrated in Figure 5;
- Figure 7 is a perspective view of a partial assembly of some component parts of the gripper illustrated in Figure 1;
- Figure 8 is a top plan view of the assembly illustrated in Figure 7.

With reference to the above Figures, the gripper according to the present invention comprises:
- a handling arm 1,
- a plate 2 for seizing and supporting the preform 3,
- an interconnection means 4 provided between said arm and said plate and firmly joined thereto,
- two symmetrical side gripping members 5 and 6,
- a cylindrical spring 8 provided between corresponding extremities of said gripping members 5 and 6.

Said plate 2 is provided, at an extremity thereof, with a semi-circular aperture 7 having such a diameter as adequate to enable it to accommodate a part of a cylindrical portion 28 of the collar of the preform 3.

It is however possible for said aperture to be given a non-circular shape, and to be for instance in the shape of an even non-circular arc instead, as far as it proves anyway capable of getting coupled with an adequate portion of the collar of the preform.

It is furthermore provided, in correspondence of the opposite side edges thereof, with two grooves 9 and 10 adapted to accommodate a respective side gripping member 5 and 6.

Said side gripping members 5 and 6 are hmged on said interconnection means 4 by means of appropriate pivotally connecting means (pivots, pins and the like) and, since said interconnecting means 4 is firmly joined with said plate 2, it ensues that said side gripping members 5 and 6 are substantially attached to said plate, while however being able to slightly rotate with respect to said plate thanks to said pivotally connecting means getting engaged into respective appropriate holes 11 and 12 provided in said side gripping members.

These members are provided at the respective extremities 13 and 14 located in correspondence of said semi-circular aperture 7, with two respective arcs of a circle 15 and 16.

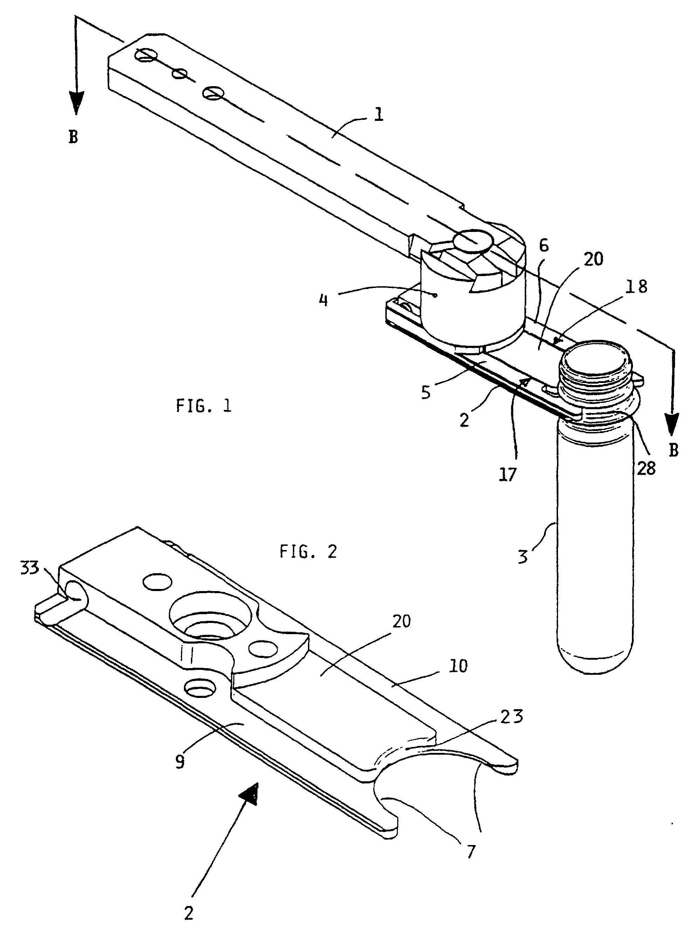

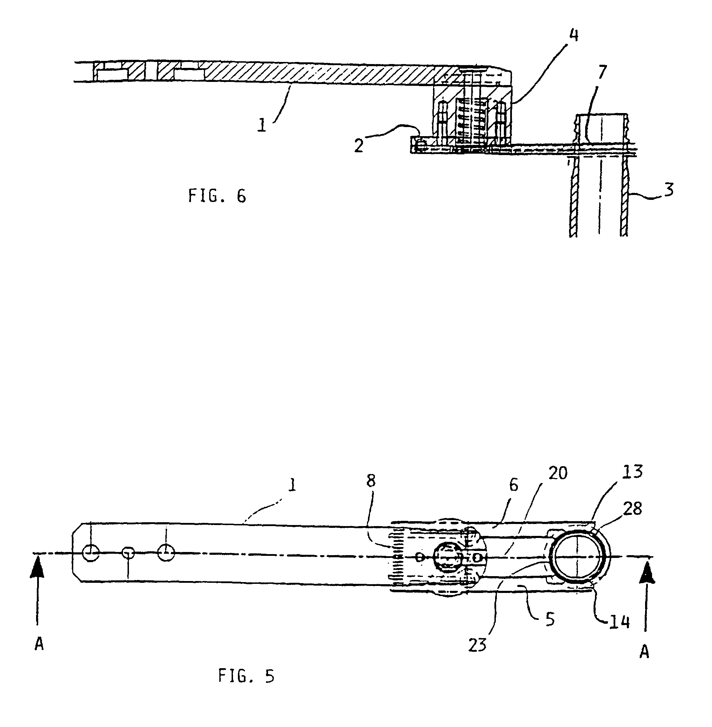

On the opposite side of said extremities 13 and 14 there is provided a cylindrical compression spring 8 which, as such, tends therefore to keep said extremities 13 and 14 closed, or at least approached to each other, said extremities being anyway limited in their separation gap by the fact that the inner sides 17, 18, respectively, of said extremities 13 and 14 are adapted to abut against the outer edges of a central relief 20 of said support plate 2, as this is illustrated in particular in Figures 1 and 5.

Said side members are adapted to move into at least a resting position and at least a working position; the resting position is determined by the action of the spring 8 that tends to move said extremities 13 and 14 closer to each other up to the point at which the stopping action of said central relief 20 comes into play.

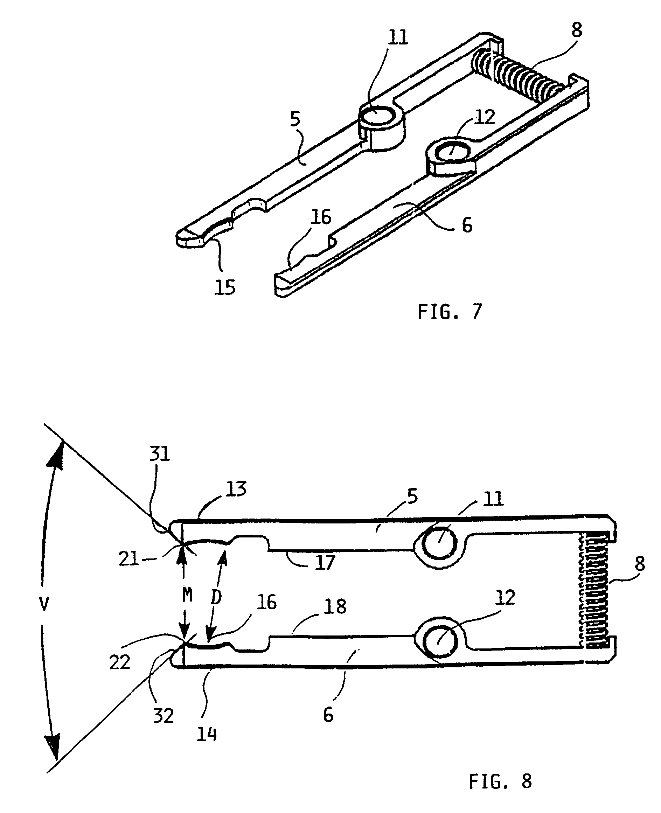

In this resting position, said arcs of a circle 15 and 16 move into an arrangement as illustrated symbolically in Figures 7 and 8, ie.:
- they identify a circle whose diameter D is slightly smaller than the diameter H of the semi-circular aperture 7, and
- the outer edges 21 and 22, respectively, of said arcs of a circle 15 and 16 are located at a distance M that is smaller than said diameter D and also smaller than the outside diameter of the preform.

The working position is illustrated in Figures 1, 5 and 6: it can be noticed that the preform is inserted within said semi-circular aperture 7, where it is retained by said arcs of a circle 15 and 16 which are pressed against a cylindrical portion of the collar of said preform by the effect of the elastic action of the spring 8 and also owing to the fact that the diameter of said collar is greater than the diameter D of said arcs of a circle in the resting position thereof, so that, when the preform is so inserted, said arcs of a circle are deflected outwardly, thereby causing the preform to be held firmly.

In an advantageous manner, said preform retaining action can be further improved if said central relief 20 is provided, in correspondence of the edge thereof which is adjacent to said semi-circular aperture 7, with abutting means in the shape of an arc of circle 23, as illustrated in particular in Figure 2, which are adapted to get fittingly into coupling with a cylindrical portion of the collar of the preform, as illustrated in Figures 1,5 and 6.

In this way, the combined effect of said side members 5 and 6 so closing elastically and said abutting means 23 moving so into coupling against the collar of the preform causes the latter to be held firmly, in an elastically releasable manner. against the described gripper.

It is in fact sufficient for an appropriate portion of the collar of the preform to be pressed in an axial direction into said semi-circular aperture in order to cause said side gripping members to move apart by an adequate extent, thereby allowing for the preform to slide into said semi-circular aperture. When said side gripping members are then so moved into such a position, they tend to move back into their resting position, owing to the action of the spring 8, thereby causing the collar of the preform to be held firmly.
To sum up, the grippers for preforms having a collar portion, according to the invention do include:
- a handling arm (1),
- means (2) adapted to support and handle the preform (3),
- interconnection means (4) provided between said arm and said support means and firmly joined thereto,
- said support means (2) being formed by a plate made in a single integral piece that is provided at an extremity thereof with a preferably semi-circul aperture (7) adapted to move into coupling with and accommodate a portion (28) of the collar of the preform,
- two preferably symmetrical, parallel side gripping members (5, 6) hinged on to said plate, whose two extremities (13,14) are formed with respective contours (15, 16). adapted to be capable to move into fittingly coupling with two respective portions (15, 16) of said collar of the preform, and are further adapted to elastically move closer to each other up to a pre-determined position.

It should be particularly noticed that, with such an embodiment, the side stresses on the preform are easily neutralized by the resistance of the arms of the semi-circular aperture 7, without any consequence on the capability thereof to grip and hold the preform in a firm and efficient manner. On the other hand, the axial stresses determined by the preform being inserted in and released from the gripper may be limited to any desired extent by simply adjusting the characteristics of the spring 8 accordingly, without anyway impairing the stability and, above all, the precision of the position in which the preform is held, owing to the effect of the abutting means 23 getting so coupled.

A further improvement in the way in which the preform is inserted is easily obtained if said two side gripping members 5 and 6 are provided, at the respective extremities 13 and 14, with respective edges 31, 32 with an appropriate flared shape and arranged so as to define a V-shaped or funnel-shaped configuration in view of facilitating the preform to move into self-positioning and said extremities 13, 14 to move apart under the action of even a moderate axial pressure exerted by the preform.

It shall be appreciated that the description and illustrations given above with reference to the accompanying drawings have been given by mere way of exemplification of the present invention, and that a number of variants and modifications can therefore introduced thereto without departing from the scope of the present invention.

## Claims

1. Grippers for preforms having a collar portion, comprising:
- a handling arm (I),
- support means (2) adapted to support and handle the preform (3), formed by a plate made in a single integral piece that is provided at an extremity thereof with a preferably semi-circular aperture (7) adapted to move into coupling with and accomodate a portion (28) of the collar of the preform,
- interconnection means (4) provided between said arm and said support means and firmly joined thereto,
- two symmetrical, parallel side gripping members (5, 6) hinged on to said plate, whose two extremities (13, 14) are formed with respective contours (15, 16) adapted to be capable to move into fittingly coupling with two respective portions (15, 16) of said collar of the preform, and arc further adapted to elastically move closer to each other up to a pre-determined position.
- one or more elastic members that operate in a compressing mode on said two side gripping members on the opposite side of said respective extremities (13, 14),
- said elastic members comprising a cylindrical spring (8) acting on said elastic members in contrast thereto, wherein said plate is provided, on the opposite side of said extremities, with a hole (33) adapted to accommodate said spring, **characterised in that** said plate is provided centrally with a relief portion (20), said resting position thereof said side gripping members being abutting against respective grooves (9, 10) of said relief portion.

2. Gripper according to claim 1. **characterised in that** said relief portion (20) is provided, on the edge thereof which is adjacent to said aperture (7) with a step-like abutment (23) that is adapted to fittingly couple with said cylindrical portion (28) of the collar of the preform.

3. Gripper according to claim 2, **characterized in that** said plate is provided centrally with a relief portion (20), wherein in said resting position thereof said side gripping members abut against respective grooves (9, 10) of said relief portion.

4. Gripper according to claim 3, **characterized in that** there are provided one or more elastic members that operate in a compressing mode on said two side gripping members on the opposite side of said respective estremities (13, 14).

5. Gripper according to claim 4, **characterized in that** said elastic members comprise a cylindrical spring (8) acting on said elastic members in contrast thereto, wherein said plate is preferably provided, on the opposite side of said extremities, with a hole (33) adapted to accommodate said spring.

6. Gripper according to any of the preceding claims, **characterized in that** said two side gripping members (5, 6) are provided with respective outer edges (31, 32) that are so oriented as to be able to define a funnel-shaped or V-shaped configuration adapted to facilitate the insertion of said cylindrical portion of the collar of said preform.

7. Gripper according to any of the preceding claims, **characterized in that** said relief portion (20) is provided, on the edge thereof which is adjacent to said aperture (7), with a step-like abutment (23) that is adapted to fittingly couple with said cylindrical portion (28) of the collar of the preform.

8. Gripper according to any of the preceding claims, **characterized in that** it is adapted to enable said cylindrical portion (28) of the collar of the preform to be fitted into and removed from said aperture (7), with a snap-like action, by simply pressing and pulling, respectively, said cylindrical portion against said outer edges (31, 32) capable of widening elastically of said two side gripping members.

## Patentansprüche

1. Greifer für Vorformlinge mit einem Halsbereich, umfassend:
- einen Handhabungsarm (1),
- eine Halteeinrichtung (2), die so gestaltet ist, dass sie den Vorformling (3) festhält und handhabt, welche durch eine Platte gebildet wird, die integral einstückig hergestellt ist, und an deren äußerem Ende eine vorzugsweise halbkreisförmige Öffnung (7) vorgesehen ist, die so gestattet ist, dass sie in Kopplung zwecks Aufnahme eines Bereiches (28) des Halses des Vorformlinges bewegt werden kann,
- eine Verbindungseinrichtung (4), die zwischen dem Arm und der Halteeinrichtung vorgesehen und mit diesem fest verbunden ist,
- zwei symmetrische, parallele, seitliche Greifelemente (5,6), die an der Platte angelenkt sind, und deren zwei äußere Enden (13, 14) mit entsprechenden Konturen (15, 16) versehen sind, die es ermöglichen, sie in feste Kopplung mit den jeweiligen Bereichen (15, 16) des Halses des Vorformlinges zu bewegen, und die weiterhin so gestaltet sind, dass sie sich elastisch aufeinander zu in eine vorbestimmte Position bewegen,
- ein oder mehrere elastische(s) Element(e), welche(s) in drückender Weise auf die beiden Greifelemente an der gegenüberliegenden Seite der jeweiligen äußeren Enden (13, 14) einwirken,
- wobei die elastischen Elemente eine Zylinderfeder (8) umfassen, die den elastischen Elementen entgegen wirkt, und die Platte auf der den äußeren Enden gegenüberliegenden Seite mit einer Bohrung (33) versehen ist, welche so gestaltet ist, dass sie die Feder aufnimmt, **dadurch gekennzeichnet, dass** die Platte in der Mitte mit einem hervorstehenden Bereich (20) versehen ist, und die seitlichen Greifelemente in ihrer Ruheposition gegen die jeweiligen Ausnehmungen (9, 10) des hervorstehenden Bereiches drücken.

2. Greifer nach Anspruch 1, **dadurch gekennzeichnet, dass** an der Kante des vorstehenden Bereiches (20), welche sich benachbart zur Öffnung (7) befindet, eine stufenartige Ausnehmung (23) vorgesehen ist, die so gestaltet ist, dass sie fest mit dem zylindrischen Bereich (28) des Halses des Vorformlinges gekoppelt werden kann.

3. Greifer nach Anspruch 2, **dadurch gekennzeichnet, dass** die Platte in der Mitte mit einem vorstehenden Bereich (20) versehen ist, an welchem in deren Ruheposition die seitlichen Greifelemente an den jeweiligen Ausnehmungen (9, 10) des vorstehenden Bereiches anliegen.

4. Greifer nach Anspruch 3, **dadurch gekennzeichnet, dass** ein oder mehrere elastische(s) Elemente(e) vorgesehen ist (sind), welche(s) in drückender Weise auf die beiden seitlichen Greifelemente an der den jeweiligen äußeren Enden (13, 14) gegenüberliegenden Seite einwirken.

5. Greifer nach Anspruch 4, **dadurch gekennzeichnet, dass** die elastischen Elemente eine Zylinderfeder (8) umfassen, die den elastischen Elementen entgegenwirkt, und die Platte vorzugsweise an der den äußeren Enden gegenüberliegenden Seite mit einer Bohrung (33) versehen ist, die so gestaltet ist, dass sie die Feder aufnimmt.

6. Greifer nach einem oder mehreren der vorhergehenden Ansprüche, **dadurch gekennzeichnet, dass** die beiden seitlichen Greifelemente (5, 6) mit jeweiligen Außenkanten (31, 32) versehen sind, die so ausgerichtet sind, dass sie die Bildung einer trichter - oder V-förmigen Gestalt ermöglichen, und so gestaltet sind, dass sie das Einfügen des zylindrischen Bereiches des Halses des Vorformlinges erleichtern.

7. Greifer nach einem oder mehreren der vorhergehenden Ansprüche, **dadurch gekennzeichnet, dass** der vorstehende Bereich (20) an seiner Kante, welche sich neben der Öffnung (7) befindet, mit einer stufenartigen Ausnehmung (23) versehen ist, die so gestaltet ist, dass sie eine feste Kopplung mit dem zylindrischen Bereich (28) des Halses des Vorformlinges ermöglicht.

8. Greifer nach einem oder mehreren der vorhergehenden Ansprüche, **dadurch gekennzeichnet, dass** er so gestaltet ist, dass es möglich ist, den zylindrischen Bereich (28) des Halses des Vorformlinges mittels einer schnappenden Bewegung durch jeweiliges einfaches Drücken oder Ziehen des zylindrischen Bereiches entgegen den Außenkanten (31, 32) in der Öffnung (7) festzulegen oder aus dieser zu entfernen, wobei die beiden seitlichen Greifelemente elastisch aufgeweitet werden können.

## Revendications

1. Pinces de préhension pour des préformes ayant des parties formant collier, comprenant :
- un bras de manutention **(1)**,
- des moyens supports **(2)** adaptés pour soutenir et manipuler la préforme **(3)**, formés par une plaque, fabriquée dans un seul élément d'un seul tenant, qui est munie, à une extrémité, d'une ouverture **(7),** de préférence semi-circulaire, adaptée pour recevoir et se placer en accouplement avec une partie **(28)** du collier de la préforme,
- des moyens de liaison **(4)** prévus entre ledit bras et lesdits moyens supports, et joints fermement à eux,
- deux éléments de préhension latéraux parallèles symétriques **(5, 6)** articulés sur ladite plaque, dont les deux extrémités **(13, 14)** sont formées avec des contours respectifs **(15, 16)** adaptés pour pouvoir se placer en accouplement ajusté avec deux parties respectives **(15, 16)** dudit collier de la préforme, et sont de plus adaptées pour se rapprocher élastiquement l'une de l'autre jusqu'à une position prédéterminée,
- un ou plusieurs éléments élastiques qui opèrent dans un mode de compression sur lesdits deux éléments de préhension latéraux sur le côté opposé desdites extrémités respectives **(13, 14),**
- lesdits éléments élastiques comprenant un ressort cylindrique **(8)** agissant sur lesdits éléments élastiques par opposition à eux, dans lesquelles ladite plaque est munie, du côté opposé auxdites extrémités, d'un trou **(33)** adapté pour recevoir ledit ressort, **caractérisé en ce que** ladite plaque est munie au centre d'une partie en relief **(20)**, ladite position de repos desdits éléments de préhension latéraux étant en butée contre des gorges respectives **(9, 10)** de ladite partie en relief.

2. Pince de préhension selon la revendication 1, **caractérisée en ce que** ladite partie en relief **(20)** est munie, sur son bord qui est adjacent à ladite ouverture **(7)**, d'une butée **(23)** de type gradin qui est adaptée pour s'accoupler de manière ajustée à ladite partie cylindrique **(28)** du collier de la préforme.

3. Pince de préhension selon la revendication 2, **caractérisée en ce que** ladite plaque est munie au centre d'une partie en relief **(20)**, dans laquelle ladite position de repos desdits éléments de préhension latéraux bute contre des gorges respectives **(9,10)** de ladite partie en relief.

4. Pince de préhension selon la revendication 3, **caractérisée en ce qu'**il est prévu un ou plusieurs éléments élastiques qui opèrent dans un mode de compression sur lesdits deux éléments de préhension latéraux du côté opposé desdites extrémités respectives **(13, 14)**.

5. Pince de préhension selon la revendication 4, **caractérisée en ce que** lesdits éléments élastiques comprennent un ressort cylindrique **(8)** agissant sur lesdits éléments élastiques en opposition à eux, dans laquelle ladite plaque est de préférence munie, sur les côtés opposés desdites extrémités, d'un trou **(33)** adapté pour recevoir ledit ressort.

6. Pince de préhension selon l'une des revendications précédentes, **caractérisée en ce que** lesdites éléments de préhension latéraux **(5, 6)** sont munis de bords extérieurs respectifs **(31, 32)** qui sont orientés de sorte à pouvoir définir une configuration en forme d'entonnoir ou de V adaptée pour faciliter l'insertion de ladite partie cylindrique du collier de ladite préforme.

7. Pince de préhension selon l'une des revendications précédentes, **caractérisée en ce que** ladite partie en relief **(20)** est munie, sur son bord qui est adjacent à ladite ouverture **(7)**, d'une butée **(23)** de type gradin qui est adaptée pour s'accoupler de manière ajustée à ladite partie cylindrique **(28)** du collier de la préforme.

8. Pince de préhension selon l'une des revendications précédentes, **caractérisée en ce qu'**elle est adaptée pour permettre à ladite partie cylindrique **(28)** du collier de la préforme d'être montée dans et retirée de ladite ouverture **(7),** avec une action d'encliquetage, par simple pression et traction, respectivement, de ladite partie cylindrique contre lesdits bords extérieurs **(31, 32)** pouvant s'élargir élastiquement desdits deux éléments de préhension latéraux.
